# EUROPEAN PATENT APPLICATION

(11) **EP 4 656 505 A1**
(43) Date of publication of application: **03.12.2025**
(21) Application number: 24216083.6
(22) Date of filing: 28.11.2024
(51) Int. Cl.: B62K 5/027, B62K 5/08, B62K 5/10, B62K 25/08, F16F 9/16, F16F 9/26

(54) **A SYSTEM FOR STEERING A LEANING MOTOR VEHICLE WITH TWO FRONT WHEELS**

(30) Priority: 19.11.2024 GR 20240100827
(71) Applicant: Motonius P.C., 73100 Chania (GR)
(72) Inventor: SPANOUDAKIS, Polychronis, 73100 Chania (GR)
(74) Representative: Bardehle Pagenberg Partnerschaft mbB Patentanwälte Rechtsanwälte

(57) **Abstract**

The invention relates to a system for steering a leaning motor vehicle with two front wheels and to a leaning motor vehicle with two front wheels, system for steering a leaning motor vehicle with two front wheels. The system for steering a leaning motor vehicle with two front wheels comprising a first telescopic fork for a first wheel and a second telescopic fork for a second wheel. Each of the first telescopic form and the second telescopic fork comprising an upper telescopic outer tube and a lower telescopic outer tube, the lower telescopic outer tube being connected to a means for receiving a front wheel, a telescopic inner tube having a first end in longitudinal direction and a second end opposite the first end, the telescopic inner tube being configured to slidably engage with the upper telescopic outer tube and the lower telescopic outer tube, wherein the upper telescopic outer tube engages with the telescopic inner tube at the first end and the lower telescopic outer tube engages with the telescopic inner tube at the second end, and at least one mounting element connected to the upper telescopic outer tube and rigidly connected by means of at least two connecting elements to the respective other mounting element of the other fork, wherein the at least one respective mounting element are rotatably connected the respective connecting elements.

## Description

### TECHNICAL FIELD

The present invention relates to a system for steering a leaning motor vehicle with two front wheels and a leaning motor vehicle with two front wheels comprising the system for steering a leaning motor vehicle with two front wheels.

### BACKGROUND

In recent years, significant developments have been made in the design of three-wheeled vehicles, particularly those featuring two front steering wheels connected to the vehicle frame via a suspension system and a single rear driving wheel. These vehicles aim to combine the stability and comfort of a three-wheeled structure with the dynamic handling typically associated with motorcycles.

Various approaches have been explored to increase stability during straight, upright driving. For example, vehicles where the front wheels are linked by a transversal arm at a fixed length to the vehicle body have been proposed e.g., in EP 3 601 027 B1. However, while this configuration increases stability on straight paths, it introduces limitations in cornering ability due to the unchanging distance between the front wheels.

To address this issue, attempts have been made to improve stability by reducing the front track width. Solutions have been proposed that position the supporting shafts connecting the front wheels and suspension on the outer sides of each front wheel (right side of the right wheel, left side of the left wheel), which allows for a closer spacing between the wheels and a narrower front track during straight driving, e.g., in EP 3 162 680 A2. However, these designs provide only a limited angle during cornering.

Accordingly, there remains a need for a three-wheeled vehicle design that increases stability without compromising maneuverability in curves, allowing the front track width to dynamically adjust for optimal handling and stability across different driving conditions.

### SUMMARY OF THE INVENTION

The objective of the present invention is to provide a system for steering a leaning motor vehicle with two front wheels, which overcomes one or more of the above-mentioned problems of the prior art.

A first aspect of the invention provides a system for steering a leaning motor vehicle with two front wheels. The system comprising a first telescopic fork for a first wheel and a second telescopic fork for a second wheel. The first telescopic fork for a first wheel and the second telescopic fork for a second wheel each comprising an upper telescopic outer tube and a lower telescopic outer tube, the lower telescopic outer tube being connected to a means for receiving a front wheel. The first telescopic fork for a first wheel and the second telescopic fork for a second wheel each comprising a telescopic inner tube having a first end in longitudinal direction and a second end opposite the first end, the telescopic inner tube being configured to slidably engage with the upper telescopic outer tube and the lower telescopic outer tube, wherein the upper telescopic outer tube engages with the telescopic inner tube at the first end and the lower telescopic outer tube engages with the telescopic inner tube at the second end. The first telescopic fork for a first wheel and the second telescopic fork for a second wheel each comprises at least one mounting element connected to the upper telescopic outer tube and rigidly connected by means of at least two connecting elements to the respective other mounting element of the other fork, wherein the at least one respective mounting element are rotatably connected the respective connecting elements.

With the system of the first aspect, the stability during leaning of the leaning motor vehicle increases.

In a first implementation of the system according to the first aspect, the first telescopic fork and second telescopic fork are configured to increase the distance between the wheels when a lateral load is applied to the first telescopic fork for a first wheel and/or the second telescopic fork for a second wheel.

With the above the stability during leaning of the leaning motor vehicle increases.

In a further implementation of the system according to the first aspect, if a lateral load is applied to the system for steering a leaning motor vehicle with two front wheels such that the system for steering a leaning motor vehicle with two front wheels leans towards the side of the first telescopic fork, the length of the first telescopic fork decreases and the length of the second telescopic fork increases, and if a lateral load is applied to the system for steering a leaning motor vehicle with two front wheels such that the system for steering a leaning motor vehicle with two front wheels leans towards the side of the second telescopic fork, the length of the second telescopic fork decreases and the length of the first telescopic fork increases.

In a further implementation of the system according to the first aspect, if a lateral load is applied to the system for steering a leaning motor vehicle with two front wheels such that the system for steering a leaning motor vehicle with two front wheels leans towards the first telescopic fork, the telescopic inner tube of the first telescopic fork is configured to slide into the upper telescopic outer tube of the first telescopic fork and the telescopic inner tube of the second telescopic fork is configured to slide out of the upper telescopic outer tube of the second telescopic fork, and if a lateral load is applied to the system for steering a leaning motor vehicle with two front wheels such that the system for steering a leaning motor vehicle with two front wheels leans towards the second telescopic fork, the telescopic inner tube of the second telescopic fork is configured to slide into the upper telescopic outer tube of the second telescopic fork and the telescopic inner tube of the first telescopic fork is configured to slide out of the upper telescopic outer tube of the first telescopic fork.

The above implementations ensure that the distance between the wheels during leaning of the motor vehicle increases, increasing the stability of the leaning motor vehicle during leaning operation and cornering capabilities.

In a further implementation of the system according to the first aspect, if an axial force is exerted onto the first wheel and/or the second wheel in the longitudinal direction of the telescopic forks, the corresponding telescopic inner tube of the respective first and/or second wheel is configured to slide into its respective lower telescopic outer tube.

In a further implementation of the system according to the first aspect, the telescopic inner tube of the first telescopic fork is mechanically coupled to the telescopic inner tube of the second telescopic fork, such that movement of the telescopic inner tube of the first telescopic fork in a first direction causes the telescopic inner tube of the second telescopic fork to move in the opposite direction and vice versa, wherein preferably, the telescopic inner tube of the first telescopic fork and the telescopic inner tube of the second telescopic fork are mechanically coupled to the lower telescopic outer tube by means of a spring element.

In a further implementation of the system according to the first aspect, the first telescopic fork for the first wheel and the second telescopic fork for the second wheel each further comprising a linking element mechanically coupled to a central lateral element, the central lateral element being rotatably connected to a connecting element, wherein the linking element is configured to exert a force onto the respective other linking element of the other telescopic fork via the central lateral element.

With the above, high traction during leaning of the system is ensured.

In a further implementation of the system according to the first aspect, the linking element exerts a force onto the respective other linking element of the other axle during lateral movement of the telescopic inner tube, wherein movement of the telescopic inner tube of the first telescopic fork in a first direction forces the telescopic inner tube of the second telescopic fork to move in the opposite direction and vice versa.

In a further implementation of the system according to the first aspect, the linking element is mechanically coupled to the telescopic inner tube by means of a rigid element.

In a further implementation of the system according to the first aspect, the at least one mounting element is rigidly connected to the respective other at least one mounting element, such that the distance between the upper telescopic outer tubes remains constant.

With this a narrow distance between the wheels can be ensured during straight driving of the leaning motor vehicle, providing improved driving properties.

In a further implementation of the system according to the first aspect, the at least one mounting element is rigidly connected to the respective other at least one mounting element, such that the distance between the upper telescopic outer tubes remains constant.

With this optimal driving in curvy and/or offroad scenarios is ensured.

In a further implementation of the system according to the first aspect, the system further comprises a steering element connected to a connecting element and mechanically coupled to the at least one mounting element of each fork and configured to rotate the at least one mounting element of each fork.

In a further implementation of the system according to the first aspect, each of the first telescopic fork and second telescopic fork each comprise a first upper telescopic outer tube, a first lower telescopic outer tube and a corresponding first telescopic inner tube and a second upper telescopic outer tube, a second lower telescopic outer tube and a corresponding second telescopic inner tube, the first and second telescopic inner tubes being configured to slidably engage with their respective upper telescopic outer tubes and lower telescopic outer tubes, wherein the first and second lower telescopic outer tubes are connected to the means for receiving a front wheel, and wherein the first and second upper telescopic outer tubes are connected to the at least one mounting element of the respective telescopic fork.

In a further implementation of the system according to the first aspect, the system further comprises a mounting bracket connected to the at least two connecting element and configured to be mounted onto the leaning motor vehicle.

In a further implementation of the system according to the first aspect, the telescopic inner tube and the upper telescopic outer tube are positioned only on one side of their respective wheels.

In a further implementation of the system according to the first aspect, the central lateral element is configured to be positioned perpendicular to the telescopic inner tube and the upper telescopic outer tube in a non-leaning position of the leaning motor vehicle; and be positioned at an angle between -90 and 90° relative to the telescopic inner tube and the telescopic outer tube in a leaning position of the leaning motor vehicle.

A second aspect of the invention provides a leaning motor vehicle with two front wheels comprising a rear wheel and the system for steering a leaning motor vehicle with two front wheels according to any one of the preceding aspects/implementations.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a frontal view of a system in accordance with an embodiment of the present invention,
- FIG. 2: is an angled view of an enlarged portion of the system in accordance with a further embodiment of the present invention,
- FIG. 3: is a frontal view of a system in accordance with an embodiment of the present invention,
- FIG. 4: is an angled view of the system in accordance with a further embodiment of the present invention,
- FIG. 5: is an angled view of an enlarged portion of the system in accordance with a further embodiment of the present invention,
- FIG. 6: is a top-down view of a system in accordance with an embodiment of the present invention,
- FIG. 7: is a frontal view of a system in accordance with an embodiment of the present invention,
- FIG. 8: is an angled view of an enlarged portion of the system in accordance with a further embodiment of the present invention,
- FIG. 9: is an angled rear view of a system in accordance with an embodiment of the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

In the description of the present invention, it should be understood that the terms *"one end", "the other end", "outer side", "upper", "lower", "above", "inner side",* "under", "below", *"horizontal", "coaxial", "central", "end", "part",* "portion", "length", "outer end" etc., which indicate the orientation or positional relationship, are based on the orientation or positional relationship shown in the drawings. The terms such as "upper", "above", *"lower", "below", "under"* and the like used in the present invention to indicate a relative position in space are used for the purpose of facilitating explanation to describe a unit or feature shown in the drawings relative to the relationship of another unit or feature. The term of the relative position in space may be intended to include different orientations of the device in use or operation other than those shown in the figures. For example, if the device in the figure is turned over, the unit described as being "below" or *"under"* other units or features will be *"above"* the other units or features. Therefore, the exemplary term "below"/"lower" can encompass both the above and below orientations. The device can be oriented in other ways (rotated by 90 degrees or other orientations), and the space-related descriptors used herein are explained accordingly. More specifically, the word *"outer"* means that one unit or element is arranged or configured relatively in an exterior direction of the device towards the (an)other unit(s) or element(s); the word *"inner"* means that one unit or element is arranged or configured relatively in an interior direction of the device towards the other units, layers or elements.

The present invention relates to a system for steering a leaning motor vehicle with two front wheels 13, 13a. The leaning motor vehicle may be a motorcycle type vehicle. Preferably, the motorcycle type vehicle comprises one or two front wheels 13, 13a and one or two back wheels. In embodiments where the motorcycle type vehicle comprises one front wheel, the system for steering a leaning motor vehicle with two front wheels 30, 30a is configured to replace the single front wheel. Preferably, the system for steering a leaning motor vehicle with two front wheels 30, 30a is configured to be mounted onto the leaning motor vehicle.

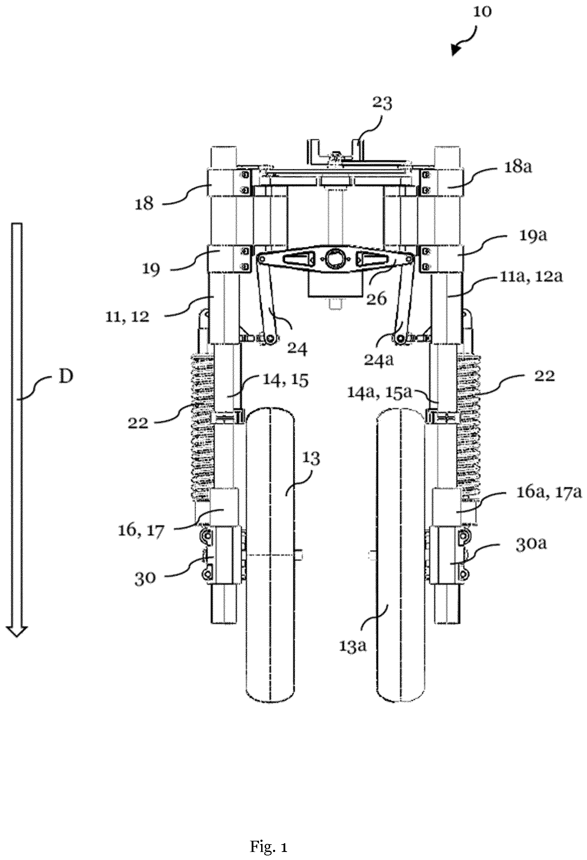

In Fig. 1 an exemplary system for steering a leaning motor vehicle with two front wheels 10. The system comprises a first telescopic fork for a first wheel 13 and a second telescopic fork for a second wheel 13a. Preferably, the first telescopic fork and second telescopic fork are configured to increase the distance between the wheels 13, 13a when a lateral load is applied to the first telescopic fork for a first wheel 13 and/or the second telescopic fork for a second wheel 13a.

The first telescopic fork for a first wheel 13 and the second telescopic fork for a second wheel 13a each comprising an upper telescopic outer tube 11, 11a, 12, 12a and a lower telescopic outer tube 16, 16a, 17, 17a, the lower telescopic outer tube 16, 16a, 17, 17a being connected to a means for receiving a front wheel 30, 30a. The first telescopic fork for a first wheel 13 and the second telescopic fork for a second wheel 13a each comprising a telescopic inner tube 14, 14a, 15, 15a having a first end in longitudinal direction and a second end opposite the first end. The telescopic inner tube 14, 14a, 15, 15a being configured to slidably engage with the upper telescopic outer tube 11, 11a, 12, 12a and the lower telescopic outer tube 16, 16a, 17, 17a. The upper telescopic outer tube 11, 11a, 12, 12a engages with the telescopic inner tube 14, 14a, 15, 15a at the first end and the lower telescopic outer tube 16, 16a, 17, 17a engages with the telescopic inner tube 14, 14a, 15, 15a at the second end. The first telescopic fork for a first wheel 13 and the second telescopic fork for a second wheel 13a each comprising a mounting element 18, 18a, 19, 19a connected to the upper outer tube and rigidly connected by means of at least two connecting elements 20, 21 to the respective other mounting element 18, 18a, 19, 19a of the other fork. The respective outer tubes are rotatably connected to their respective mounting elements 18, 18a, 19, 19a. Preferably, each mounting element 18, 18a, 19, 19a is rigidly connected to the respective other mounting element 18, 18a, 19, 19a, such that the distance between the upper telescopic outer tubes 11, 11a, 12, 12a remains constant.

Preferably, the mounting elements 18, 18a, 19, 19a comprise a circular portion configured to receive the upper telescopic outer tubes 11, 11a, 12, 12a of the two forks. In some examples, the mounting elements 18, 18a, 19, 19a are triple clamps.

Preferably, the upper telescopic outer tubes 11, 11a, 12, 12a and the lower telescopic outer tubes 16, 16a, 17, 17a have a substantially tubular shape. Preferably, the inner diameter of the upper telescopic outer tubes 11, 11a, 12, 12a and the lower telescopic outer tubes 16, 16a, 17, 17a is substantially similar. Preferably, the telescopic inner tubes 14, 14a, 15, 15a have a substantially cylindrical or tubular shape. Preferably, the (outer) diameter of the telescopic inner tubes 14, 14a, 15, 15a is substantially similar to the inner diameter of the upper telescopic outer tubes 11, 11a, 12, 12a and the lower telescopic outer tubes 16, 16a, 17, 17a.

In some examples, the telescopic inner tube 14, 14a, 15, 15a of the first telescopic fork is mechanically coupled to the telescopic inner tube 14, 14a, 15, 15a of the second telescopic fork, such that movement of the telescopic inner tube 14, 14a, 15, 15a of the first telescopic fork in a first direction D causes the telescopic inner tube 14, 14a, 15, 15a of the second telescopic fork to move in the opposite direction and vice versa. In the example of Fig. 1, the telescopic inner tubes 14, 14a, 15, 15a are connected to each other via linking elements 24, 24a, 25, 25a that are mechanically coupled to a central lateral element 26. The central lateral element 26 is rotatably connected to one of the connecting elements 20, 21, wherein each of the linking elements 24, 24a, 25, 25a are configured to exert a force onto the respective other linking element 24, 24a, 25, 25a of the other telescopic fork via the central lateral element 26. Preferably, the central linking element 24, 24a, 25, 25a is configured to form an angle of -90° to 90° relative to the telescopic inner tube 14, 14a, 15, 15a and the telescopic outer tube in a leaning position of the leaning motor vehicle.

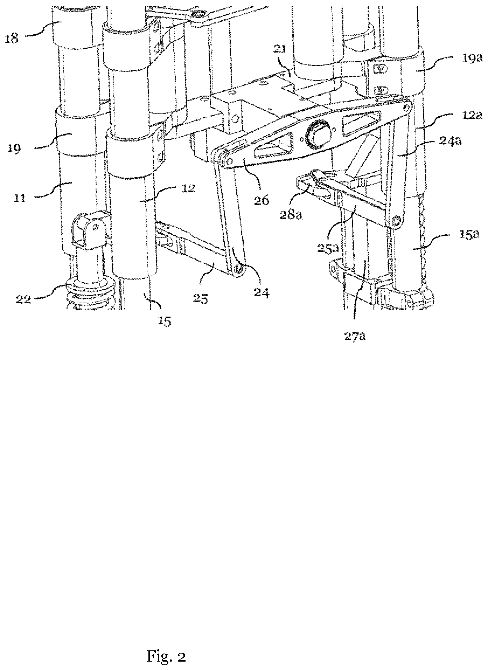

The linking elements 24, 24a, 25, 25a and the central lateral element 26 will be described in more detail with respect to Fig. 2. Fig. 2 is an angled view of a portion of the system for steering a leaning motor vehicle with two front wheels 10 of Fig. 1. Moreover, any aspects described with respect to Fig. 2 may be implemented in the previous examples. Accordingly, any aspects described with respect to Fig. 1 may also apply for the system for steering a leaning motor vehicle with two front wheels 10 of Fig. 2.

In the example of Fig. 2, each of the telescopic inner tubes 14, 14a, 15, 15a are connected to a respective linking mount 27, 27a. The linking mount 27, 27a may be connected to a spring element 22, mechanically coupling the respective lower telescopic outer tubes 16, 16a, 17, 17a to their respective inner telescopic tubes. Preferably, the if an axial force is exerted onto the first wheel 13 and/or the second wheel 13a in the longitudinal direction of the telescopic forks, the corresponding telescopic inner tube 14, 14a, 15, 15a of the respective first and/or second wheel 13a is configured to slide into its respective lower telescopic outer tube 16, 16a, 17, 17a. Preferably, the linking mount 27, 27a is a clamp element and/or a rigid element.

The linking mounts 27, 27a may be connected to or comprise a bearing element 28, 28a extending towards the respective other axle. I.e., the bearing element of the first axle 28 may extend towards the second axle and the bearing element of the second axle 28a may extend towards the first axle. The linking elements 24, 24a, 25, 25a may be configured to engage with and/or be connected to the bearing element 28, 28a of the linking mounts 27, 27a.

Preferably, the bearing element 28, 28a is configured to transfer an axial force exerted by the sliding of the telescopic inner tube 14, 14a, 15, 15a in the upper telescopic outer tube 11, 11a, 12, 12a onto the central lateral element 26, and/or configured not to transfer a force onto the central lateral element 26 exerted onto the linking element 24, 24a, 25, 25a by the rotation of the mounting element 18, 18a, 19, 19a. The axial force is a force perpendicular to the lateral force and extends in the longitudinal direction of the first and second axles. Preferably, the axial direction corresponds to the first direction D. Preferably, the linking elements 24, 24a, 25, 25a are connected to their respective bearing element 28, 28a and the central lateral element 26. In the example of Fig. 2, the linking elements 24, 24a, 25, 25a each comprise a first portion 25, 25a and a second portion 24, 24a connected to and perpendicular to the first portion 25, 25a. Preferably, the first portion 25, 25a extends in a direction substantially perpendicular to the bearing element 28, 28a (towards the forward driving direction of the leaning motor vehicle), and/or the second portion 24, 24a extends in a direction substantially parallel to the longitudinal direction D of the forks. Preferably, the first portion of the linking elements 25, 25a are connected to their respective bearing element 28, 28a and the second portion of the linking elements 24, 24a are connected to the central lateral element 26.

The bearing element 28, 28a may comprise a groove or a cut out section, preferably having a curved shape. Preferably, the groove or a cut out section is arranged on a surface of the bearing element 28, 28a facing directed in the axial direction. The corresponding linking element 24, 24a, 25, 25a (or the first portion of the corresponding linking element 24, 24a, 25, 25a may comprise an engaging portion configured to slidably engage with the groove or cut out section of the bearing element 28, 28a. An end portion of the (first portion 25, 25a of the) linking element 24, 24a, 25, 25a configured to engage with the bearing element 28, 28a may comprise a first protruding portion and a second protruding portion, preferably forming a clevis fork. The end portion of the (first portion 25, 25a of the) linking element 24, 24a, 25, 25a may comprise a pin element configured to engage with the first protruding portion and the second protruding portion (of the clevis fork), preferably forming a loop. This configuration of the linking element 24, 24a, 25, 25a/bearing element 28, 28a allows to transmit an axial force from the bearing element 28, 28a through the linking element 24, 24a, 25, 25a to the central lateral element 26. Moreover, by means of the groove or cut our section, a rotational force (generated through the rotation of the linking mount 27, 27a/bearing element 28, 28a) is not exerted from the bearing element 28, 28a to the linking element 24, 24a, 25, 25a/the central lateral element 26.

Preferably, this arrangement is provided on both axles. Accordingly, rotational forces generated through the rotation of any of the mounting/bearing element 28, 28as is not exerted onto the linking elements 24, 24a, 25, 25a /the central lateral element 26 via the bearing element 28, 28as, and/or axial force exerted from the mounting/bearing element 28, 28a are translated through the linking element 24, 24a, 25, 25a to the central lateral element 26. This way, an axial force exerted by one of the inner telescopic tubes/ linking mounts 27, 27a in a first direction D causes an axial force onto the inner telescopic tube/ linking mount 27, 27a of the other axle in a second direction opposite the first direction D.

Preferably, each of the telescopic inner tubes 14, 14a, 15, 15a are configured to slidably engage with the upper telescopic outer tube 11, 11a, 12, 12a during lateral movement of the system for steering a leaning motor vehicle with two front wheels. The lateral movement is a movement in a lateral direction caused through a lateral force applied to the system for steering a leaning motor vehicle with two front wheels. Preferably, the lateral force is applied to the system for steering a leaning motor vehicle with two front wheels 10 through leaning/steering of the system for steering a leaning motor vehicle with two front wheels. For example, when the system for steering a leaning motor vehicle with two front wheels 10 is mounted to the leaning motor vehicle, during leaning of the leaning motor vehicle, the lateral force is applied to the system for steering a leaning motor vehicle with two front wheels. In this case, the telescopic inner tube 14, 14a, 15, 15a is configured to slidably engage with the upper telescopic outer tube 11, 11a, 12, 12a. The sliding of the telescopic inner tube 14, 14a, 15, 15a into or out of the upper telescopic outer tube 11, 11a, 12, 12a creates the axial force onto the linking element 24, 24a, 25, 25a.

Accordingly, if a lateral load is applied to the system for steering a leaning motor vehicle with two front wheels 10 such that the system for steering a leaning motor vehicle with two front wheels 10 leans towards the first telescopic fork, the telescopic inner tube of the first telescopic fork 14, 15 is configured to slide into the upper telescopic outer tube of the first telescopic fork 11, 12 and the telescopic inner tube of the second telescopic fork 14a, 15a is configured to slide out of the upper telescopic outer tube of the second telescopic fork 11a, 12a. This way, the length of the first telescopic fork decreases and the length of the second telescopic fork increases.

Similarly, if a lateral load is applied to the system for steering a leaning motor vehicle with two front wheels 10 such that the system for steering a leaning motor vehicle with two front wheels 10 leans towards the second telescopic fork, the telescopic inner tube of the second telescopic fork 14a, 15a is configured to slide into the upper telescopic outer tube of the second telescopic fork 11a, 12a and the telescopic inner tube of the first telescopic fork 14, 15 is configured to slide out of the upper telescopic outer tube of the first telescopic fork 11, 12. This way, the length of the second telescopic fork decreases and the length of the first telescopic fork increases.

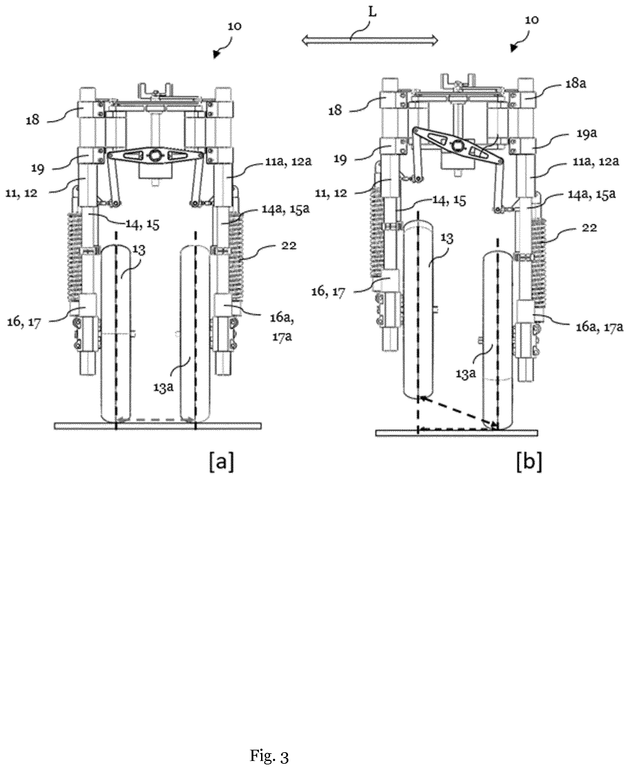

This is exemplarily shown in Fig. 3. Fig. 3 shows an example of the system for steering a leaning motor vehicle with two front wheels 10 in a first position [a], where no lateral force is applied to the system for steering a leaning motor vehicle with two front wheels 10 and a second position [b], where a lateral force (L) is applied to the system for steering a leaning motor vehicle with two front wheels 10 in the direction of the first telescopic fork. Any of the aspects set forth with respect to Figs. 1 and 2 may be applied to the examples of Fig. 3 as well. Moreover, any aspects described with respect to Fig. 3 may be implemented in the previous examples.

In the example [a] of Fig. 3, no lateral force is applied to the system for steering a leaning motor vehicle with two front wheels 10. The system for steering a leaning motor vehicle with two front wheels 10 is in a straight position which corresponds to driving the leaning motor vehicle in a straight-forward direction. (as a steering operation is also not initiated). In this example, the length of the first axle corresponds to the length of the second axle.

In the second example [b], the lateral force in the direction L has caused the system for steering a leaning motor vehicle with two front wheels 10 to lean towards the first telescopic fork. As shown in Fig. 3, if the system for steering a leaning motor vehicle were to drive on a street, the system for steering a leaning motor vehicle would lean towards the first telescopic fork. In the example of Fig. 3, the telescopic inner tube of the first telescopic fork 14, 15 is slid into the upper telescopic outer tube of the first telescopic fork 11, 12 and the telescopic inner tube of the second telescopic fork 14a, 15a is slid out of the upper telescopic outer tube of the second telescopic fork 11a, 12a. The length of the first telescopic inner tube 14, 15 outside the upper telescopic outer tube 11, 12 is smaller than the length of the second telescopic inner tube 14a, 15a outside the upper telescopic outer tube 11a, 12a. As described with respect to Fig. 2, this is caused *(inter alia)* by the linking elements 24, 24a, 25, 25a exerting an axial force onto the central linking element 24, 24a, 25, 25a, causing the respective other inner telescopic tube to move in a different direction. In this example, the distance between the two wheels has increase, compared to a situation where no lateral force is applied to the system for steering a leaning motor vehicle with two front wheels 10 (i.e., a situation in which the system for steering a leaning motor vehicle with two front wheels 10 is not in a leaning position, as shown in Fig. 1).

Returning to Fig. 1, preferably, the telescopic inner tube 14, 14a, 15, 15a and the upper telescopic outer tube 11, 11a, 12, 12a are positioned only on one side of their respective wheels.

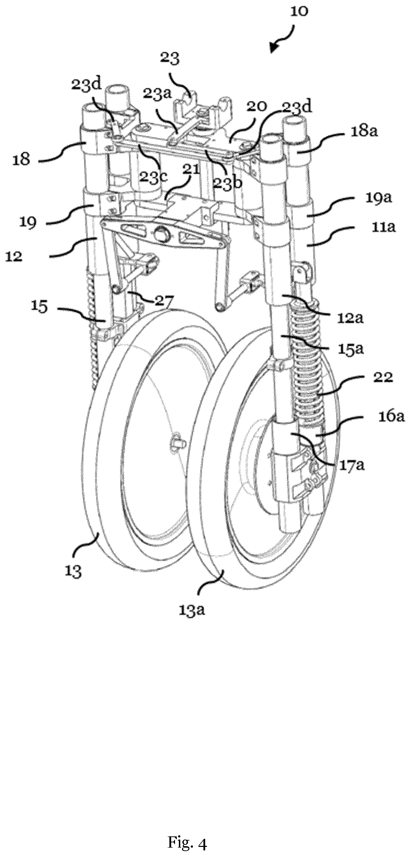

Fig. 4 shows the system for steering a leaning motor vehicle with two front wheels 10 according to another example. Any aspects described above may apply for this example as well. Moreover, any aspects described with respect to Fig. 4 may be implemented in the previous examples.

In the example of Fig. 4, each of the axles comprise two sets of telescopic inner tubes 14, 14a, 15, 15a, upper telescopic outer tubes 11, 11a, 12, 12a and lower telescopic outer tubes 16, 16a, 17, 17a. Each of the sets of telescopic inner tubes 14, 14a, 15, 15a, upper telescopic outer tubes 11, 11a, 12, 12a and lower telescopic outer tubes 16, 16a, 17, 17a of each axle extend parallel to each other. Both of the upper telescopic outer tubes 11, 11a, 12, 12a of each of the sets are connected to one side of the mounting element 18, 18a, 19, 19a. In this example, the linking mount 27, 27a is arranged between and connected to the two inner telescopic tubes. Preferably, the linking mount 27, 27a extends parallel to the two inner telescopic tubes. Preferably, on each axle, the two upper telescopic outer tubes 11, 11a, 12, 12a are rigidly connected to each other via the mounting element 18, 18a, 19, 19a, the two lower telescopic outer tubes 16, 16a, 17, 17a are rigidly connected to each other via the means for receiving a front wheel 30, 30a and the inner telescopic tubes are rigidly connected to each other via the linking mount 27, 27a. Preferably, the spring element 22 extends mostly between the two inner telescopic tubes.

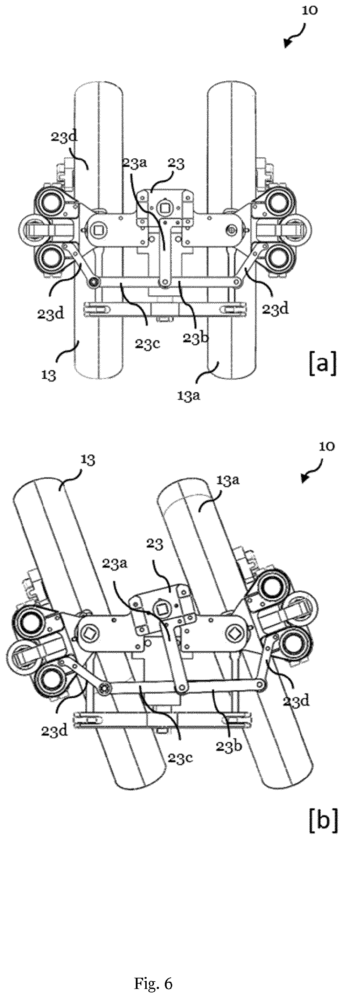

The system for steering a leaning motor vehicle with two front wheels 10 may further comprise a steering element 23 configured to steer the leaning motor vehicle. The steering element 23 is shown in more detail in Fig. 6, wherein the first example [a] of Fig. 6 relates to the steering element 23 in a position that corresponds to the leaning motor vehicle driving in a straight-forward direction and the second example [b] shows the steering element 23 in a position corresponding to cornering. The steering element 23 comprises a steering mechanism mechanically coupled to the mounting elements 18, 18a, 19, 19a of the two forks and configured to exert the rotational force onto the two forks. Preferably, the steering mechanism is configured to exert the same rotational force onto the first axle and the second axle, causing the wheels to steer in the same direction. Preferably, the steering mechanism is mechanically coupled to one of the mounting elements 18, 18a, 19, 19a. Preferably, the steering mechanism comprises a rotational portion configured to engage with a steering handle for use by a driver of the leaning motor vehicle. The rotational portion may be connected to a first portion 23a extending towards the forward driving direction of the leaning motor vehicle. Preferably, the first portion extends perpendicular to the mounting element 18, 18a, 19, 19a while rotational portion is in a position that causes the wheels to drive in a straight direction. The steering mechanism may further comprise a first lateral element 23b and a second lateral element 23c extending substantially in a direction from the first axle to the second axle. The first lateral element 23b having a length corresponding substantially to half the distance between the first axle to the second axle and the second lateral element 23c having a length corresponding substantially to the distance between the first axle to the second axle. The first lateral element 23b being connected to the first portion 23a and the second lateral element 23c. The steering mechanism may further comprise two connecting portions 23d each connected to one end of the second lateral element 23c and configured to connect the second lateral element 23c to the mounting elements 18, 18a, 19, 19a and/or the upper telescopic outer tubes 11, 11a, 12, 12a. One connecting portion 23d is connected to the first lateral element 23b and the second lateral element 23c and the other connecting portion 23d is connected to the second lateral element 23c and not connected to the first lateral element 23b. Preferably, each of the connections between the portions/elements of the steering mechanism are rotational connections, as shown in Fig. 4, allowing for rotational movement of the connecting potions/elements. For example, the connection between first portion 23a and/or the first lateral element 23b and/or the second lateral element 23c and/or or the connecting portions 23d may comprise a bearing element 28, 28a.

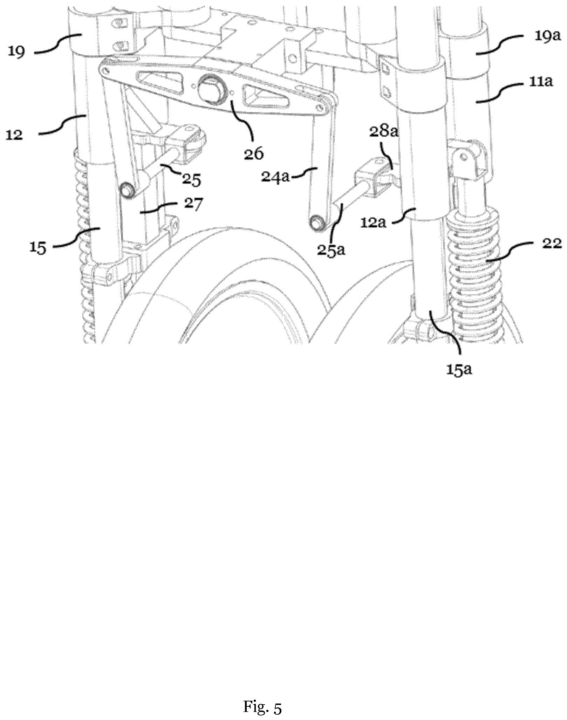

An alternative arrangement of the system for steering a leaning motor vehicle with two front wheels 10 is shown in Figs. 4 and 5. Any aspects described above may apply for this example as well. Moreover, any aspects described with respect to Figs. 4 and 5 may be implemented in the previous examples.

The examples of Figs. 4 and 5 show an alternative implementation of the linking elements 24, 24a, 25, 25a and the bearing elements 28, 28a. In this example, the bearing elements 28, 28a comprise a substantially circular cut out having a size substantially corresponding to the size of the corresponding pin element of the first portion 25, 25a, wherein the pin element is rotatably connected to the bearing element 28, 28a. The pin element is position at a first end of the first portion 25, 25a. At a second end of the first portion 25, 25a opposite the first end, the first portion 25, 25a has a substantially cylindrical shape, wherein the first portion 25, 25a is received by a corresponding cylindrical opening in the second portion 24, 24a. The first portion 25, 25a is rotatably connected to the second portion 24, 24a in the cylindrical opening, preferably by means of a bearing element inside the second portion 24, 24a. The first element 25, 25a may extend through the cylindrical opening of the second portion 24, 24a. In this example, the linking mounts 27, 27a and the bearing elements 28, 28a may be two individual pieces connected to each other. This is an alternative to the bearing elements 28, 28a and linking mount 27, 27a being made of one piece, as shown with previous examples. Both implementations are possible alternatives for any of the examples of Figs. 1 to 5.

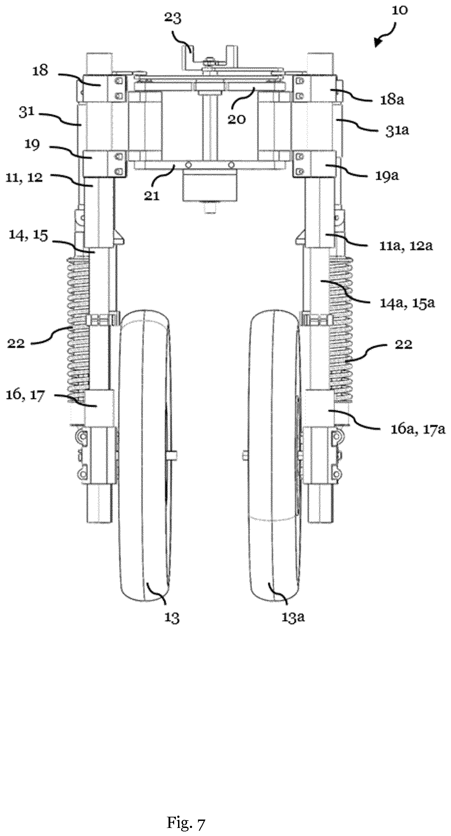

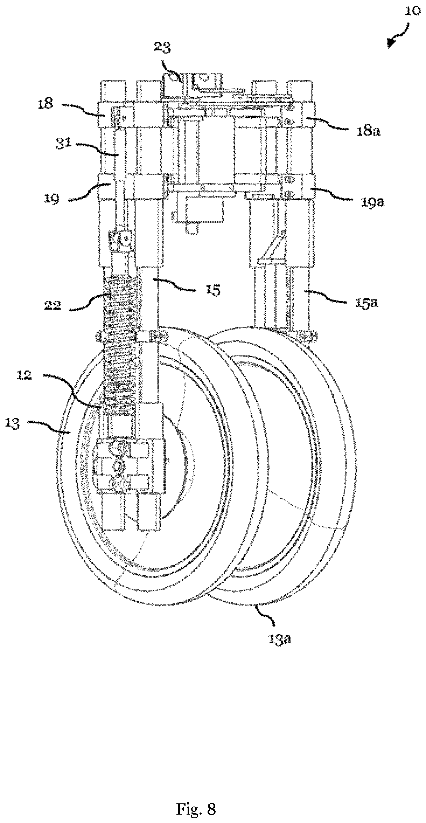

An alternative arrangement of the system for steering a leaning motor vehicle with two front wheels 10 is shown in Figs. 7 and 8. Any compatible aspects described above may apply for this example as well. Moreover, any compatible aspects described with respect to Figs. 7 and 8 may be implemented in the previous examples.

In the example embodiment shown in Figs. 7 and 8, the system for steering a leaning motor vehicle with two front wheels 10 may be implemented using a hydraulic system. An alternative to the initial system described, is based on providing different means of lean mechanism for the lean/tilt of the vehicle. In this example, the hydraulic system may be used as an alternative to arrangement of linking elements 24, 24a, 25, 25a and the central lateral element 26, resulting in a system with less parts involved configured to provide the same operation principle to lean the vehicle. This means, that the inner telescopic tubes 14, 14a, 15, 15a and the corresponding outer telescopic tubes 11, 11a, 12, 12a, 16, 16a, 17, 17a behave as described with respect to Figs. 1 to 6, wherein the force is distributed/directed by means of the hydraulic system 31, 31a. In this example, a hydraulic actuator 31, 31a is rigidly connected to the upper telescopic outer tubes 11, 11a, 12, 12a and the linking mount 27, 27a and/or the bearing element 28, 28a. Preferably, the hydraulic actuator 31, 31a is positioned on an outer side of the upper telescopic outer tubes 11, 11a, 12, 12a. The outer side being the side extending in the direction opposite to the arrangement of the wheels on each axle. The hydraulic actuators 31, 31a, and/or the hydraulic system are mechanically coupled to the spring element 22. The two hydraulic actuators 31, 31a on each of the axles are connected to each other via a hydraulic pipe system configured to direct a force applied to hydraulic actuator 31, 31a of one axle to the hydraulic actuator 31, 31a of the other axle. For example, when a lateral force L is exerted on the first axle such that the hydraulic actuator retracts, the actuator of the second axle will extend by the same length. Preferably, a valve may be integrated in the hydraulic system to allow control of the leaning operation of the system.

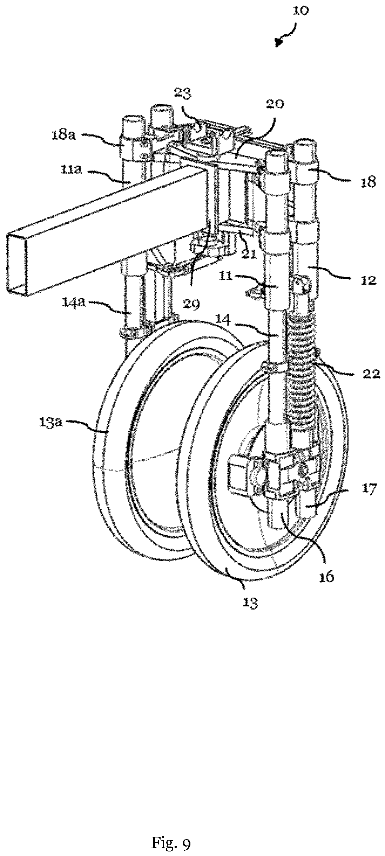

Fig. 9 shows the system for steering a leaning motor vehicle with two front wheels 10 in another example. Any aspects described above may apply for this example as well. Moreover, any aspects described with respect to Fig. 9 may be implemented in the previous examples.

The exemplary system for steering a leaning motor vehicle with two front wheels 10 of Fig. 9 comprises a mounting bracket 29 connected to the at least two connecting elements 20, 21 and configured to be mounted onto the leaning motor vehicle. Preferably, the system for steering a leaning motor vehicle with two front wheels 10 is removably mountable to the leaning motor vehicle. In this context, removably mountable means that the system for steering a leaning motor vehicle with two front wheels 10 may be connected to the leaning motor vehicle e.g., by means of screws, allowing easy mounting/removal of the system for steering a leaning motor vehicle with two front wheels. In some examples, the system for steering a leaning motor vehicle with two front wheels 10 is fixedly connected to the leaning motor vehicle. In such examples, the system for steering a leaning motor vehicle with two front wheels 10 cannot be removed from the leaning motor vehicle without extensive work. For example, the system for steering a leaning motor vehicle with two front wheels 10 may be welded to the leaning motor vehicle.

In some examples, the mounting bracket 29 may be used to mount the system for steering a leaning motor vehicle with two front wheels 10 to the leaning motor vehicle. In other examples, the system for steering a leaning motor vehicle with two front wheels 10 may directly be connected to the leaning motor vehicle by means of the connecting elements 20, 21. The first variant (with mounting bracket 29) allows to upgrade any regular leaning motor vehicle to a two front wheel leaning motor vehicle. The second variant (without mounting bracket 29) may be preferred when the leaning motor vehicle is initially manufactured with the system for steering a leaning motor vehicle with two front wheels.

The invention also relates to a leaning motor vehicle with two front wheels 10 and a rear wheel comprising the system for steering a leaning motor vehicle with two front wheels 10 as described with respect to any of the above examples.

## Claims

1. A system for steering a leaning motor vehicle with two front wheels (10), comprising:
a first telescopic fork for a first wheel (13a) and a second telescopic fork for a second wheel (13a), each comprising:
an upper telescopic outer tube (11, 11a, 12, 12a) and a lower telescopic outer tube (16, 16a, 17, 17a), the lower telescopic outer tube (16, 16a, 17, 17a) being connected to a means for receiving a front wheel (30, 30a);
a telescopic inner tube (14, 14a, 15, 15a) having a first end in longitudinal direction and a second end opposite the first end, the telescopic inner tube (14, 14a, 15, 15a) being configured to slidably engage with the upper telescopic outer tube (11, 11a, 12, 12a) and the lower telescopic outer tube (16, 16a, 17, 17a), wherein the upper telescopic outer tube (11, 11a, 12, 12a) engages with the telescopic inner tube (14, 14a, 15, 15a) at the first end and the lower telescopic outer tube (16, 16a, 17, 17a) engages with the telescopic inner tube (14, 14a, 15, 15a) at the second end; and
at least one mounting element (18, 18a, 19, 19a) connected to the upper telescopic outer tube (11, 11a, 12, 12a) and rigidly connected by means of at least two connecting elements (20, 21) to the respective other mounting element (18, 18a, 19, 19a) of the other fork, wherein the at least one respective mounting element (18, 18a, 19, 19a) are rotatably connected the respective connecting elements (20, 21).

2. The system for steering a leaning motor vehicle with two front wheels (10) according to the preceding claim, wherein the first telescopic fork and second telescopic fork are configured to increase the distance between the wheels (13, 13a) when a lateral load is applied to the first telescopic fork for a first wheel (13) and/or the second telescopic fork for a second wheel (13a).

3. The system for steering a leaning motor vehicle with two front wheels (10) according to any one of the preceding claims, wherein
if a lateral load is applied to the system for steering a leaning motor vehicle with two front wheels (10) such that the system for steering a leaning motor vehicle with two front wheels (10) leans towards the side of the first telescopic fork, the length of the first telescopic fork decreases and the length of the second telescopic fork increases, and
if a lateral load is applied to the system for steering a leaning motor vehicle with two front wheels (10) such that the system for steering a leaning motor vehicle with two front wheels (10) leans towards the side of the second telescopic fork, the length of the second telescopic fork decreases and the length of the first telescopic fork increases.

4. The system for steering a leaning motor vehicle with two front wheels (10) according to the preceding claim, wherein
if a lateral load is applied to the system for steering a leaning motor vehicle with two front wheels (10) such that the system for steering a leaning motor vehicle with two front wheels (10) leans towards the first telescopic fork, the telescopic inner tube (14, 14a, 15, 15a) of the first telescopic fork is configured to slide into the upper telescopic outer tube of the first telescopic fork (11, 12) and the telescopic inner tube (14, 14a, 15, 15a) of the second telescopic fork is configured to slide out of the upper telescopic outer tube of the second telescopic fork (11a, 12a), and
if a lateral load is applied to the system for steering a leaning motor vehicle with two front wheels (10) such that the system for steering a leaning motor vehicle with two front wheels (10) leans towards the second telescopic fork, the telescopic inner tube (14, 14a, 15, 15a) of the second telescopic fork is configured to slide into the upper telescopic outer tube of the second telescopic fork (11a, 12a) and the telescopic inner tube (14, 14a, 15, 15a) of the first telescopic fork is configured to slide out of the upper telescopic outer tube of the first telescopic fork (11, 12).

5. The system for steering a leaning motor vehicle with two front wheels (10) according to any one of the preceding claims, wherein
if an axial force is exerted onto the first wheel (13) and/or the second wheel (13a) in the longitudinal direction of the telescopic forks, the corresponding telescopic inner tube (14, 14a, 15, 15a) of the respective first and/or second wheel (13, 13a) is configured to slide into its respective lower telescopic outer tube (16, 16a, 17, 17a).

6. The system for steering a leaning motor vehicle with two front wheels (10) according to any one of the preceding claims, wherein
the telescopic inner tube (14, 14a, 15, 15a) of the first telescopic fork is mechanically coupled to the telescopic inner tube (14, 14a, 15, 15a) of the second telescopic fork, such that movement of the telescopic inner tube (14, 14a, 15, 15a) of the first telescopic fork in a first direction causes the telescopic inner tube (14, 14a, 15, 15a) of the second telescopic fork to move in the opposite direction and vice versa, wherein preferably,
the telescopic inner tube (14, 14a, 15, 15a) of the first telescopic fork and the telescopic inner tube (14, 14a, 15, 15a) of the second telescopic fork are mechanically coupled to the lower telescopic outer tube (16, 16a, 17, 17a) by means of a spring element (22).

7. The system for steering a leaning motor vehicle with two front wheels (10) according to any one of the preceding claims, wherein the first telescopic fork for the first wheel (13) and the second telescopic fork for the second wheel (13a) each further comprising:
a linking element (24, 24a, 25, 25a) mechanically coupled to a central lateral element (26), the central lateral element (26) being rotatably connected to a connecting element (21), wherein the linking element (24, 24a, 25, 25a) is configured to exert a force onto the respective other linking element (24, 24a, 25, 25a) of the other telescopic fork via the central lateral element (26).

8. The system for steering a leaning motor vehicle with two front wheels (10) according to the preceding claim, wherein the linking element (24, 24a, 25, 25a) exerts a force onto the respective other linking element (24, 24a, 25, 25a) of the other axle during lateral movement of the telescopic inner tube (14, 14a, 15, 15a), wherein movement of the telescopic inner tube (14, 14a, 15, 15a) of the first telescopic fork in a first direction forces the telescopic inner tube (14, 14a, 15, 15a) of the second telescopic fork to move in the opposite direction and vice versa.

9. The system for steering a leaning motor vehicle with two front wheels (10) according to any one of claims 7 or 8, wherein the linking element (24, 24a, 25, 25a) is mechanically coupled to the telescopic inner tube (14, 14a, 15, 15a) by means of a rigid element (27, 27a).

10. The system for steering a leaning motor vehicle with two front wheels (10) according to any one of the preceding claims, wherein the at least one mounting element (18, 18a, 19, 19a) is rigidly connected to the respective other at least one mounting element (18, 18a, 19, 19a), such that the distance between the upper telescopic outer tubes (11, 11a, 12, 12a) remains constant.

11. The system for steering a leaning motor vehicle with two front wheels (10) according to any one of the preceding claims further comprising:
a steering element (23) connected to a connecting element (20) and mechanically coupled to the at least one mounting element (18, 18a, 19, 19a) of each fork and configured to rotate the at least one mounting element (18, 18a, 19, 19a) of each fork.

12. The system for steering a leaning motor vehicle with two front wheels (10) according to any one of the preceding claims, wherein each of the first telescopic fork and second telescopic fork each comprise:
a first upper telescopic outer tube (12, 12a), a first lower telescopic outer tube (17, 17a) and a corresponding first telescopic inner tube (15, 15a) and a second upper telescopic outer tube (11, 11a), a second lower telescopic outer tube (16, 16a) and a corresponding second telescopic inner tube (14, 14a), the first and second telescopic inner tubes (14, 14a, 15, 15a) being configured to slidably engage with their respective upper telescopic outer tubes (11, 11a, 12, 12a) and lower telescopic outer tubes (16, 16a, 17, 17a), wherein the first and second lower telescopic outer tubes (16, 16a, 17, 17a) are connected to the means for receiving a front wheel (30, 30a), and wherein the first and second upper telescopic outer tubes (11, 11a, 12, 12a) are connected to the at least one mounting element (18, 18a, 19, 19a) of the respective telescopic fork.

13. The system for steering a leaning motor vehicle with two front wheels (10) according to any one of the preceding claims further comprising:
a mounting bracket (29) connected to the at least two connecting elements (20, 21) and configured to be mounted onto the leaning motor vehicle.

14. The system for steering a leaning motor vehicle with two front wheels (10) according to any one of the preceding claims, wherein the central lateral element (26) is configured to:
be positioned perpendicular to the telescopic inner tube (14, 14a, 15, 15a) and the upper telescopic outer tube (11, 11a, 12, 12a) in a non-leaning position of the leaning motor vehicle; and
be positioned at an angle between 0 and 90° relative to the telescopic inner tube (14, 14a, 15, 15a) and the telescopic outer tube in a leaning position of the leaning motor vehicle.

15. A leaning motor vehicle with two front wheels comprising:
a rear wheel; and
the system for steering a leaning motor vehicle with two front wheels (10) according to any one of the preceding claims.
